# EUROPÄISCHE PATENTSCHRIFT

(11) **EP 0 747 157 B1**
(45) Veröffentlichungstag und Bekanntmachung des Hinweises auf die Patenterteilung: **23.12.1998**
(21) Anmeldenummer: 96109203.8
(22) Anmeldetag: 07.06.1996
(51) Int. Cl.: B23D 45/14, B23D 45/02, B23Q 3/00

(54) **Vorrichtung zur paarweisen oder einzelnen Fertigung von Rahmenteilen**
Device for manufacturing window frames
Dispositif pour la fabrication des cadres de fenêtres

(30) Priorität: 06.06.1995 DE 19520069; 15.12.1995 DE 19547024
(43) Veröffentlichungstag der Anmeldung: 11.12.1996
(73) Patentinhaber: ALU-PLAST-MACHINE GMBH, 58511 Lüdenscheid (DE)
(72) Erfinder: Knorr, Gerhard, 58511 Lüdenscheid (DE)
(74) Vertreter: Müller, Eckhard, Dr.

(56) Entgegenhaltungen:
- WO-A-89/05709
- DE-A- 3 544 058
- DE-C- 3 823 634

## Beschreibung

Die Erfindung bezieht sich auf eine Vorrichtung zur paarweisen oder einzelnen Fertigung von Rahmenteilen aus profilierten Stangen aus Kunststoff, Metall, Holz o. dgl. Materialien gemäß Oberbegriff von Patentanspruch 1.

Für die Herstellung von rechteckigen Rahmen, insbesondere für Fenster und Türen werden vier Teile des Stangenmaterials in der benötigten Länge beidseitig mit einer 45°-Gehrung versehen. Der Zuschnitt erfolgt mit Kreissägen, die entsprechend dem Schnittwinkel justierbar sind. Um die Wirtschaftlichkeit zu verbessern, werden u. a. beide Profilenden simultan zuschneidende Doppelgehrungssägen oder auch beidseitig schwenkbare Einzeikreissägen eingesetzt, die in einem automatischen Doppeltakt mit Schwenken des Sägeblattes in kurzer Zeitfolge zwei Gehrungen sägen.

Zur weiteren Verbesserung der Wirtschaftlichkeit der Herstellung besteht die Möglichkeit, zwei Rahmenteile nebeneinanderliegend zu sägen, da bekanntermaßen für einen rechteckigen Rahmen jeweils zwei gleich lange Profilstücke benötigt werden. Hierzu müssen die Profilstangen gleichgerichtet, hintereinanderliegend zur Vorschubrichtung des Sägeblattes auf dem Sägentisch gespannt werden. Zum sicheren Spannen und zur Führung der Profile bei der automatischen Zufuhr werden dazu dem jeweiligen Profil angepaßte Gleit- oder Rollenanlagen benötigt, die bei der Vielzahl der eingesetzten Profile einen erheblichen Investitionsaufwand erfordern und im weiteren zeitabhängige Umrüstkosten verursachen.

Aus der DE 86 24 332 U1 ist eine Doppelgehrungssäge zum Zuschneiden von Profilen für Fenster- oder Türrahmen bekannt mit zwei in ihrem Abstand zueinander in Längsrichtung des Profiles veränderbaren Sägeaggregaten mit jeweils einem Kreissägeblatt und mit einer Spanneinrichtung zum Aufspannen des zu bearbeitenden Profils auf einer waagrecht angeordneten Auflagefläche. Die Kreissägeblätter weisen bzgl. der Auflagefläche senkrechte Sägeebenen auf und sind um lotrechte Schwenkachsen, welche jeweils mit Symmetrieachsen der Kreissägeblätter zusammenfallen, schwenkbar angeordnet. Zum Durchsägen des Profiles sind die Kreissägeblätter in lotrechter Richtung auf- und abbewegbar.

Eine weiterer Schritt bei der Herstellung von Rahmenteilen, insbesondere von Kunststoff-Fenstern, besteht im Sägen von V-förmigen Ausschnitten an der später der Rahmeninnenseite zugewandten Profilseite, in die die Fenstersprossenprofile eingeschweißt werden.

Für unsymmetrische Fensterelemente sind diese Klinkschnitte an unterschiedlichen Positionen auf den Rahmenteilen anzubringen, so daß eine Bearbeitung an einem Profilpaar mit den bekannten Sägevorrichtungen nicht möglich ist.

Eine solche Klinkenschnittsäge ist aus der den nächstkommenden Stand der Technik beschriebenden DE 38 23 634 C1 bekannt mit zwei an einem Schlitten gelagerten und mit diesem an vertikal stehenden Tragsäulen verfahrbar gelagerten Sägeaggregaten, deren Kreissägeblätter unter einem Winkel von 90° zueinander einstellbar sind. Nachteilig hierbei ist, daß für Klinkenschnitte an gegenüberliegenden Seiten vier Sägeeinheiten erforderlich sind, ebenfalls wie für das Anspitzen eines Kämpferprofils, wobei für einen 90°-Schnitt sogar ein fünftes Sägeblatt benötigt wird.

Die oben erwähnten Fenstersprossenprofile sind mit einem Spitzenschnitt von 90° passend zu den V-förmigen Rahmenausklinkungen zu versehen. Das geschieht bisher in einem zeitaufwendigen, zweifachen Aufspann- und Sägevorgang. Neben den dadurch entstehenden Kosten führt vor allem die Positionierung des Profils in Relation zum Sägeblatt zu erheblichen Toleranzen bei der Spitzensymmetrie. Um diese Toleranzen einzugrenzen, werden für die Relativbewegungen zum Teil sehr aufwendige Servoachsenpositionierantriebe eingesetzt.

Der Erfindung liegt demgegenüber die Aufgabe zugrunde, eine Vorrichtung zu schaffen, die durch ihren Aufbau den simultanen Zuschnitt von zwei Rahmenteilen ermöglicht, ohne daß jeweils dem Profil angepaßte Spann- und Führungselemente benötigt werden. Weiterhin sollen Klinkschnitte in variabler Tiefe und beliebiger Position an einem Profilpaar ausgeführt werden können, sowie Spitzenschnitte an beliebig breiten Sprossenprofilen ohne mehrfache Positionierung des Profils.

Nach einem weiteren Aspekt soll bei allen Sägevorgängen eine weitgehende Reduzierung des Schnittabfalls erreicht werden, der i. w. auf die Zerspanung in der Breite des Sägeblattes beschränkt werden soll. Gepaart mit minimalem Positionierungsaufwand für das Material und der dadurch erzielbaren kurzen Taktzeiten soll auf eine über dem Produktivitätsniveau derzeit bekannter Vorrichtungen liegende Sägevorrichtung mit der damit einhergehenden Stückkostenreduzierung geschaffen werden.

Zur Lösung der Aufgabe ist es nach der Erfindung vorgesehen, daß die Sägeneinheit ein einziges Sägeaggregat aufweist, welches um eine zur Profilauflage lotrecht angeordnete Achse verschwenkbar ist, wobei bei paarweiser Bearbeitung die Profilstangen spiegelbildlich mit den später zu den Rahmenaußenkanten weisenden Flächen zueinander auf der Auflage plaziert sind und die lotrechte Achse in der Trennebene des Profilstangenpaares angeordnet ist, während bei Bearbeitung einer einzelnen Profilstange die lotrechte Achse in der Anlagefläche von Profilstange und der Profilanlage angeordnet ist.

Drehpunkt des Sägeblattes entweder in der Trennebene zwischen den Profilen des Profilpaares zu liegen kommt, auf der Mittellinie des Sprossenprofils oder auf die seitliche Anlagekante bei Einzelprofilzuschnitt gerichtet ist.

Die Profile werden flach mit den üblicherweise nicht profilierten Rahmenansichtsflächen auf die Profilauflage gelegt und seitlich an der fest mit dem Untergestell verbundenen Anlage geführt. Bei paarweisem Zuschnitt werden die Profile spiegelbildlich mit den später zu den Rahmenaußenkanten weisenden Flächen aneinander gelegt. Durch die Erfindung ist es in konstruktiv einfacher Weise erreicht, daß durch die Anordnung von nur einem Sägeaggregat mittels eines Kreuzschnittes vier Gehrungsschnitte in einer festen Materialaufspannung erzeugt werden können.

Nach einer vorteilhaften Weiterbildung der Erfindung ist eine schwenkbare Sägeeinheit auf einem Querschlitten unter 90° zur Profillängsachse auf variable Klinktiefen, vorzugsweise auf beide Seiten des oder der zu bearbeitenden Profilstangen positionierbar, wobei die jeweils dem Profil zugewandte Sägeblattkante für den unter 90° zu den Profilaußenflächen verlaufenden Klinkschnitt genutzt wird. Das Verschwenken erfolgt wahlweise unterhalb oder oberhalb der Aufnahme bzw. des Auflagentisches für die Werkstücke.

Es hat sich auch als vorteilhaft erwiesen, daß der Sägenhub mit einer automatischen Schnittiefenjustierung versehen ist, die den Vorschub entsprechend der Profilbreitenmeßwerte begrenzt.

Nach einem anderen vorteilhaften Merkmal der Erfindung erfolgt die Zufuhr von einzelnen oder paarweisen Profilstangen durch einen profilübergreifenden Zangenvorschub entsprechend den Vorgaben der in die Maschinensteuerung integrierten Zuschnittoptimierung, die wiederum basierend auf den Positionswerten des Vorschubs und zusätzlicher Referenzpunkte die vorhandene Materialstangenlänge selbsttätig ermittelt.

Dabei erfolgt die Materialbeschickung durch ein Magazin mit nachgeordneten Bohr- und/oder Fräseinheiten.

Die Erfindung wird nachfolgend anhand eines Ausführungsbeispiels in stark vereinfachter Darstellung erläutert:

Es zeigen:
- Figur 1: die Seitenansicht der Vorrichtung, mit zwei aneinanderliegenden Profilstangen,
- Figur 2: die Draufsicht der Vorrichtung in Höhe der Linie A-B der Figur 1,
- Figur 2a: eine den Figuren 1 und 2 entsprechende Vorrichtung mit einer Profilstange,
- Figuren 3 und 3a: die schematische Darstellung der Anordnung einer Klinkschnittsäge in Draufsicht,
- Figur 3b: die Klinkenschnittsäge gemäß Figuren 3, 3a in einer Seitenansicht und
- Figur 4: einen senkrechten Schnitt durch die Profilträger an einem vertikalen Zuführmagazin der Sägeeinheit.

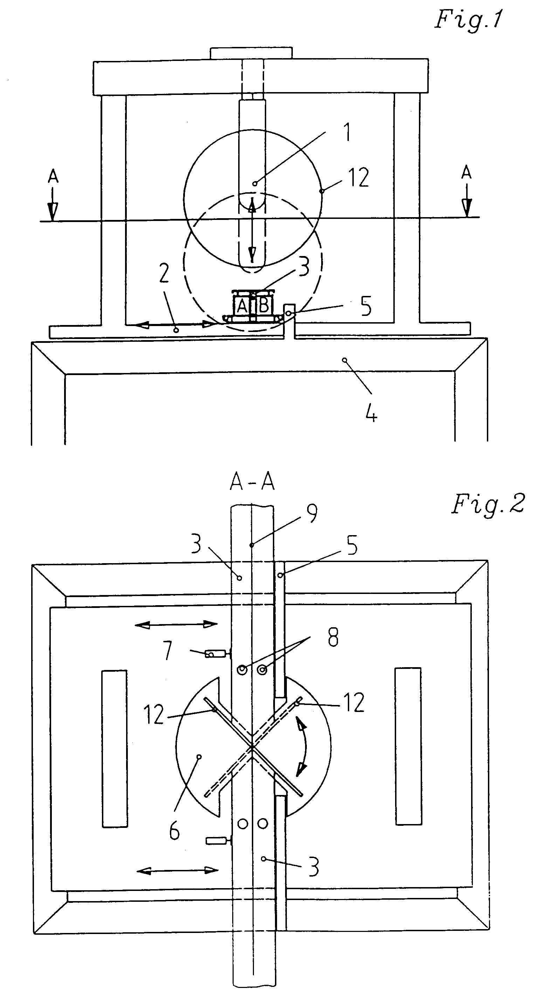

In Figur 1 ist die Aufhängung der Sägeneinheit 1 an einem portalartigen Rahmen dargestellt. Die Basis des Portals bildet die Auflage 2 für die zu bearbeitenden Rahmenprofile. Dargestellt sind weiterhin zwei Profilstangen 3 im Querschnitt, die seitlich an der mit dem Untergestell 4 verbundenen Profilanlage 5 spiegelbildlich aneinander anliegen.

Das Portal wird über einen Positionierantrieb quer zur Profilzuführrichtung positioniert. In der Darstellung befindet sich der Drehpunkt der Sägeneinheit 1 lotrecht über der Trennlinie 9 des Profilpaares. Das Sägeblatt 12 wird als Kreis dargestellt, entsprechend einer rechtwinkligen Position zu den Profilen für 90° Trennschnitte.

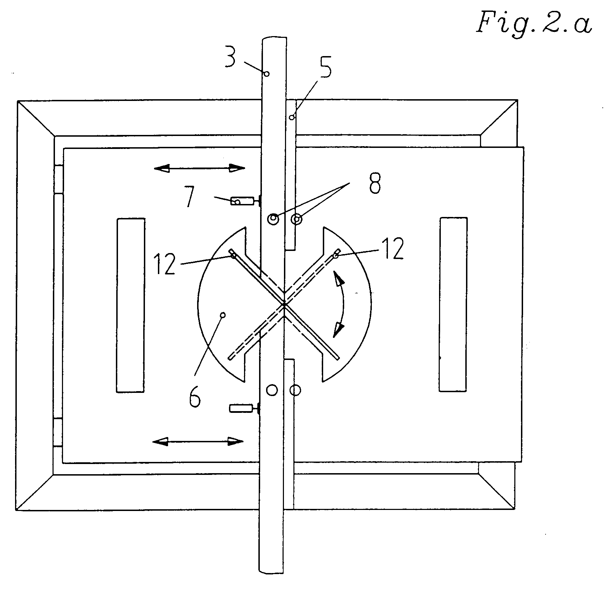

In Figur 2 werden in der Draufsicht die Durchbrüche 6 der Profilauflage 2 im Bereich der Säge für die Abfuhr der Profilabfälle beispielhaft dargestellt. Durch die Form der Profilauflage 2 werden die Profilstangen 3 bis unmittelbar vor das Sägeblatt unterstützt, wodurch ein möglichst vibrationsfreier Schnitt erzielt wird. Horizontale Spanner 7 schieben die Profile seitlich gegen die feste Anlage 5, während vertikale Spannelemente 8 beim Schnitt die Profilstangen fixieren.

Nach Figur 2a wird nur eine Profilstange 3 bearbeitet, welche der Profilanlage 5 anliegt, wobei der Drehpunkt der Sägeeinheit 1 lotrecht über der Anlagefläche angeordnet ist.

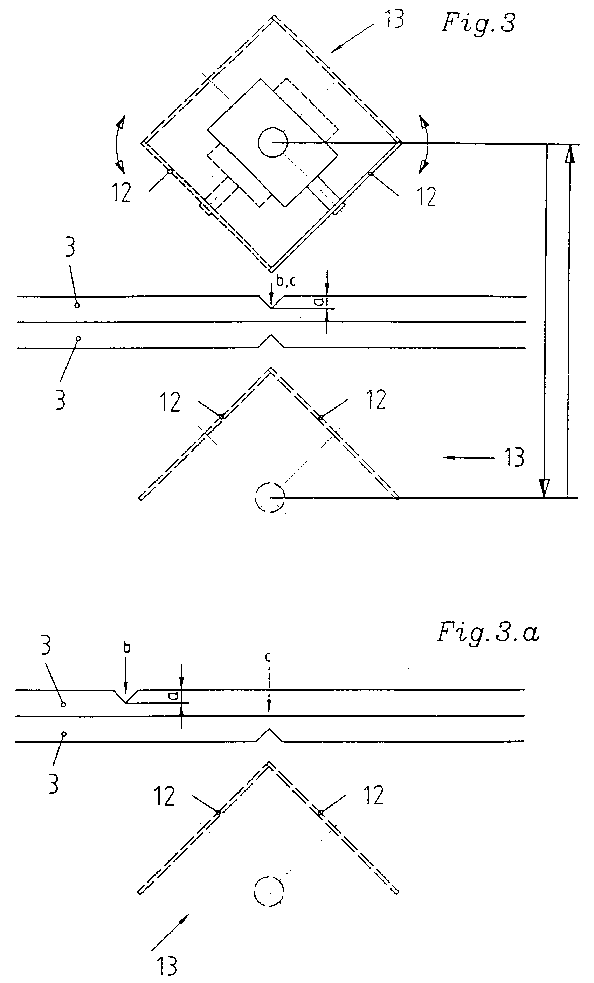

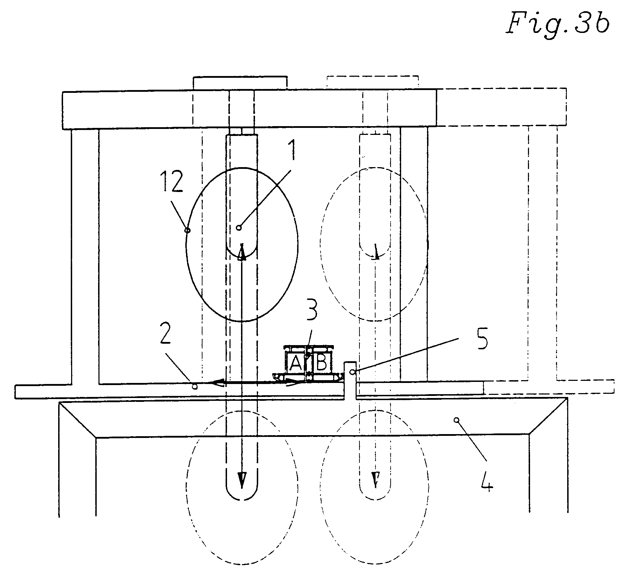

Figur 3 zeigt schematisch die Anordnung einer Klinkschnittsäge. Durch Schwenken der Einheit 13 unter 90° oder um 270° werden mit den jeweils den Profilen 3 zugewandten Kanten des Sägeblattes 12 die V-Ausschnitte ausgeführt. Die gewünschte Tiefe des Klinkschnittes a sowie die jeweilige Position b, c an Profilen (vgl. Figuren 3 und 3a) werden mit einem Positionierantrieb angefahren; in Figur 3 ist das Verfahren der Einheit 13 auf gegenüberliegende Seiten des Profiles durch Pfeile mit entgegengesetzter Richtung angedeutet. Die Durchbrüche in der Profilauflage erlauben bei dieser Anordnung das Durchführen der Einheit bis unter die Auflage.

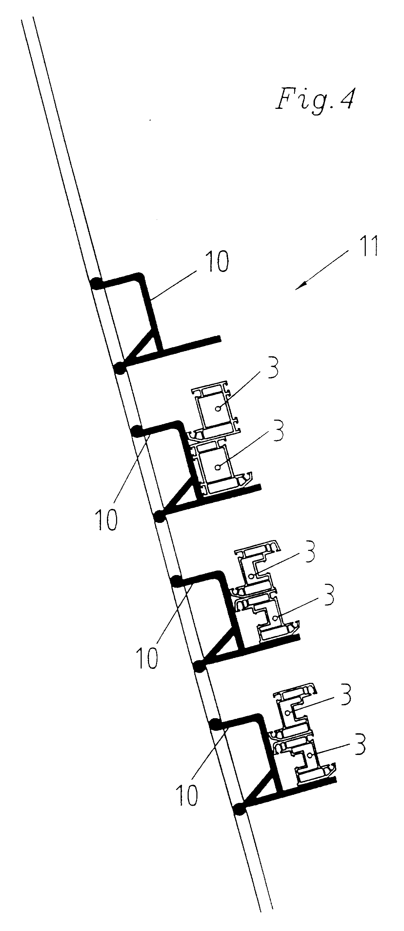

Figur 4 zeigt eine typische Anordnung der seitenverkehrt übereinanderliegenden Profilstangen 3 auf vertikal verfahrbaren Trägern 10 eines Magazins 11. Auch ist eine horizontale Anordnung der Materialzufuhr möglich. Die übereinanderliegenden Profilstangen 3 erlauben eine Bearbeitung an den drei jeweils infrage kommenden Profilseiten sowie auch der späteren Rahmenaußenkanten. Im Magazin 11 der Bearbeitungsstation werden die Profilstangen 3 seitenverkehrt und übereinanderliegend zugeführt, daß eine Bearbeitung an jeweils drei Profilseiten erfolgen kann und anschließend, nach einem seitlichen Auffächern, eine automatische, bspw. paarweise Zufuhr zur Sägeneinheit 1 ermöglicht ist.

Der gesamte Arbeitsablauf einschließlich der Profilbreitenmessung und der Längenzuschnittsoptimierung wird vorteilhaft durch eine frei programmierbarer Maschinensteuerung abgewickelt und überwacht. Die Profile können manuell aufgelegt oder vorzugsweise mit einem automatischen Vorschub in die Vorrichtung eingeführt werden. Nach erfolgtem Anschnitt werden die Profile entsprechend dem gewünschten Teilemaß durchgefördert. Bei dem folgenden vollautomatischen Sägetakt werden bspw. zwei Sprossenspitzenschnitte oder vier Gehrungsschnitte erzeugt.

Die dargestellte Profilseitenanlage hat sich als vorteilhaft erwiesen, die Profile können jedoch auch beidseitig an einer Mittenanlage geführt werden. Die vertikale Anordnung der Säge ist vorteilhaft in Bezug auf die Profilzufuhr und die Entsorgung der Abfallstücke aus dem Sägenbereich. Es ist jedoch auch eine horizontale Anordnung des Sägenvorschubs möglich.

### Bezugszeichenliste

- 1: - Sägeneinheit
- 2: - Profilauflage, Auflage
- 3: - Profilstangen, Stangenmaterial
- 4: - Untergestell
- 5: - Profilanlage, Anlage
- 6: - Durchbrüche
- 7: - Spanner
- 8: - Spannelemente
- 9: - Profillängsachse, Trennlinie
- 10: - Träger
- 11: - Magazin
- 12: - Sägeblatt
- 13: - Sägeneinheit

## Patentansprüche

1. Vorrichtung zur paarweisen oder einzelnen Fertigung von Rahmenteilen aus profiliertem Stangenmaterial (3) in Kunststoff, Metall oder Holz, insbesondere für die Herstellung von Fensterrahmen mit einer im Abstand zu einer mit einem Durchbruch (6) für das Sägeblatt (12) versehenen Profilauflage (2) angeordneten Sägeneinheit (1), welche mit der Profilauflage (2) auf einem gemeinsamen Schlitten, Rahmen o. dgl. quer zur Profillängsachse (9) positionierbar ist, wobei die Postionierbewegung relativ zu einer festen, seitlichen Profilanlage (5) und vorzugsweise entsprechend den Meßwerten einer in der Vorrichtung integrierten automatischen Profilbreitenmeßeinrichtung erfolgt, dadurch gekennzeichnet, daß die Sägeeinheit (1) ein einziges Sägeaggregat aufweist, welches um eine zur Profilauflage (2) lotrecht angeordnete Achse verschwenkbar ist, wobei bei paarweiser Bearbeitung die Profilstangen (3) spiegelbildlich mit den später zu den Rahmenaußenkanten weisenden Flächen zueinander auf der Auflage (2) plaziert sind und die lotrechte Achse in der Trennebene des Profilstangenpaares angeordnet ist, während bei Bearbeitung einer einzelnen Profilstange (3) die lotrechte Achse in der Anlagefläche von Profilstange (3) und der Profilanlage (5) angeordnet ist.

2. Vorrichtung nach Anspruch 1, dadurch gekennzeichnet, daß eine schwenkbar angeordnete Sägeeinheit (13) auf einem Querschlitten auf variable Klinktiefen (a), vorzugsweise auf beiden Seiten der zu bearbeitenden Profilstange(n) (9) positionierbar ist, wobei die jeweils dem Profil zugewandte Sägeblattkante für den Klinkschnitt genutzt wird.

3. Vorrichtung nach Anspruch 1 oder 2, dadurch gekennzeichnet, daß der Sägenhub mit einer automatischen Schnittiefenjustierung versehen ist, die den Vorschub entsprechend den Profilbreitenmeßwerten begrenzt.

4. Vorrichtung nach einem der Ansprüche 1 bis 3, dadurch gekennzeichnet, daß die Zufuhr von einzelnen oder paarweisen Profilstangen (3) durch einen profilübergreifenden Zangenvorschub, entsprechend den Vorgaben der in der Maschinensteuerung integrierten Zuschnittoptimierung erfolgt, die wiederum basierend auf den Positionswerten des Vorschubs und zusätzlicher Referenzpunkte, die vorhandene Materialstangenlänge selbsttätig ermittelt.

5. Vorrichtung nach einem der vorhergehenden Ansprüche, dadurch gekennzeichnet, daß die Materialbeschickung durch ein Magazin (11) mit nachgeschalteter Bohr- und Fräseinheit erfolgt.

## Claims

1. Device for producing pairs or single frame parts from profiled bar material (3) in plastic, metal or wood, in particular for the manufacture of window frames, having a sawing unit (1) which is arranged at a distance from a profile support (2) provided with an opening (6) for the saw blade (12) and can be positioned with the profile support (2) on a common carriage, frame or the like transversely with respect to the longitudinal axis (9) of the said profile, the positioning movement taking place in relation to a fixed, lateral profile guide (5) and preferably corresponding to the measured values of an automatic profile-width measuring instrument integrated in the device, characterized in that the sawing unit (1) has a single sawing assembly, which can be swivelled about an axis arranged perpendicularly with respect to the profile support (2), in which arrangement, if working them in pairs, the profiled bars (3) are placed on the support (2) mirror-symmetrically with the faces which later face the outer edges of the frame towards each other and the perpendicular axis is arranged in the separating plane of the pair of profiled bars, whereas, if working a single profiled bar (3), the perpendicular axis is arranged in the contact face between the profiled bar (3) and the profile guide (5).

2. Device according to Claim 1, characterized in that a sawing unit (13) which is arranged such that it can swivel can be positioned on a transverse carriage to variable V-notchdepths (a), preferably on both sides of the profiled bar(s) (9) to be worked, the saw blade edge respectively facing the profile being used for the V-notch cut.

3. Device according to Claim 1 or 2, characterized in that the saw travel is provided with an automatic cutting depth adjustment, which limits the advancement in a way corresponding to the profile-width measured values.

4. Device according to one of Claims 1 to 3, characterized in that the feeding of single or pairs of profiled bars (3) is performed by a gripper advancing means which grips over the profiles and takes place in a way corresponding to the presettings of the cutting-to-size optimization integrated in the machine control system, which automatically determines the length of the bar material present, in turn on the basis of the positional values of the advancement and additional reference points.

5. Device according to one of the preceding claims, characterized in that the material feeding is performed by a magazine (11) with a downstream drilling and milling unit.

## Revendications

1. Dispositif pour fabriquer par couples ou individuellement des éléments de cadres formés d'un matériau en forme de barre profilée (3) en matière plastique, en métal ou en bois, notamment pour la fabrication de cadres de fenêtres, comportant une unité de scie (1) qui est disposée à distance d'un support (2) pour profilés, pourvu d'un passage (6) pour la lame de scie (12), et qui peut être positionnée avec le support (2) pour profilés sur un chariot, un cadre, ou un élément analogue commun, transversalement par rapport à l'axe longitudinal (9) du profilé, le mouvement de positionnement s'effectuant par rapport à une butée latérale fixe (5) pour profilés et de préférence en fonction des valeurs de mesure d'un dispositif automatique de mesure de largeur de profilé, qui est intégré dans le dispositif, caractérisé en ce que l'unité de scie (1) comporte un seul module de scie, qui peut basculer autour d'un axe qui est perpendiculaire au support (2) pour profilés, auquel cas, lors d'un usinage par couples, les barres profilées (3) sont positionnées symétriquement sur le support (2), avec leurs surfaces tournées ultérieurement vers les bords extérieurs du cadre, et l'axe perpendiculaire est disposé dans le plan de séparation du couple de barres profilées, alors que lors de l'usinage d'une seule barre profilée (3), l'axe perpendiculaire est disposé dans la surface d'application de la barre profilée (3) et de la butée (5) pour profilé.

2. Dispositif selon la revendication 1, caractérisé en ce qu'une unité de scie (13) montée de manière à pouvoir pivoter peut être positionnée sur un chariot transversal à des profondeurs variables d'encochage (a), de préférence des deux côtés de la ou des barres profilées (9) devant être usinées, le bord de la lame de scie respectivement tourné vers le profilé étant utilisé pour la coupe d'encochage.

3. Dispositif selon la revendication 1 ou 2, caractérisé en ce que le moyeu de la scie est équipé d'un dispositif de réglage automatique de profondeur de coupe, qui limite l'avance en fonction des valeurs de mesure de la largeur du profilé.

4. Dispositif selon l'une des revendications 1 à 3, caractérisé en ce que l'amenée de barres profilées (3) individuelles ou par couples s'effectue au moyen de l'avance de pinces, qui s'engagent par dessus le profilé, en fonction des prescriptions du système d'optimisation d'avance de coupe qui est intégré dans l'unité de commande de la machine et qui détermine à chaque fois automatiquement la longueur instantanée de barre, sur la base des valeurs de position du système d'avance et de points de référence supplémentaires.

5. Dispositif selon l'une des revendications précédentes, caractérisé en ce que le chargement du matériau s'effectue au moyen d'un magasin (11), en aval duquel sont montées une unité de perçage et une unité de fraisage.
